# EUROPÄISCHE PATENTANMELDUNG

(11) **EP 1 843 189 A1**
(43) Veröffentlichungstag der Anmeldung: **10.10.2007**
(21) Anmeldenummer: 07006341.7
(22) Anmeldetag: 28.03.2007
(51) Int. Cl.: G02B 21/00

(54) **Verfahren zum Betrieb eines Laser-Scanning-Mikroskopes mit einer Scanner-Kühlvorrichtung**

(30) Priorität: 07.04.2006 DE 102006016927
(71) Anmelder: Carl Zeiss MicroImaging GmbH, 07745 Jena (DE)
(72) Erfinder: Bloos, Helmut, 07747 Jena (DE); Möhler, Gunter, 07745 Jena (DE)

(57) **Zusammenfassung**

Verfahren zum Betrieb eines Laser-Scanning-Mikroskopes,
wobei die Probe über mindestens einen Scanner beleuchtet wird und eine Bildaufnahme erfolgt
wobei am Scanner und / oder am Scannertreiber eine Temperaturmessung erfolgt
und erst bei Erreichen einer Grenztemperatur eine Kühlvorrichtung gestartet wird und vorteilhaft bei Einschalten der Kühlvorrichtung die Bildaufnahme unterbrochen wird oder
bei Erreichen einer Grenztemperatur eine Anzeigevorrichtung eine optische oder akustische Anzeige vornimmt.
Ein Temperatursensor (1) im Scanner (2) erfasst dessen Temperatur mit Hilfe eines Mikrocontrollers (3) in ausreichend kurzen Abständen. Die Temperaturerfassung des Scan-Drive-Kühlkörpers (4) erfolgt durch einen thermisch mit diesem gekoppelten Fan-Controller (5), der in Abhängigkeit von der Kühlkörpertemperatur einen Lüfter (6) ein- und ausschaltet oder mittels Puls-Weiten-Modulation (PWM) dessen Drehzahl regelt. Über einen Schalteingang (7) am Fan-Controller (5) kann der Mikrocontroller (3) für den Lüfter (6) ein Disable erzeugen. Der Fan-Controller (5) besitzt einen Übertemperaturausgang (8), der beim Überschreiten einer bestimmten Temperatur oberhalb der Lüfter-Einschaltemperatur aktiviert wird. Mit diesem Übertemperaturausgang (8) ist ein Eingang des Mikrocontrollers (3) verbunden.

## Beschreibung

Bei einigen Applikationen der Laser-Scanning-Mikroskopie ist es erforderlich, mit sehr hohen Scangeschwindigkeiten zu arbeiten, um schnell ablaufende Vorgänge zu erfassen, wie beispielsweise in der Physiologie bei der Beobachtung extrem schneller Vorgänge.

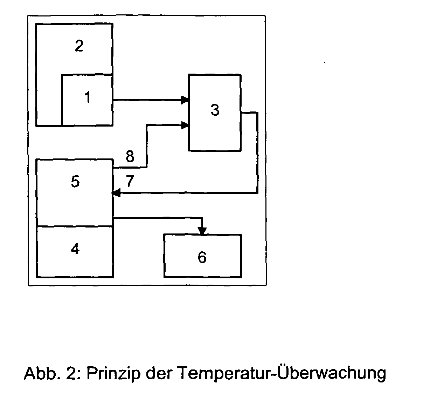

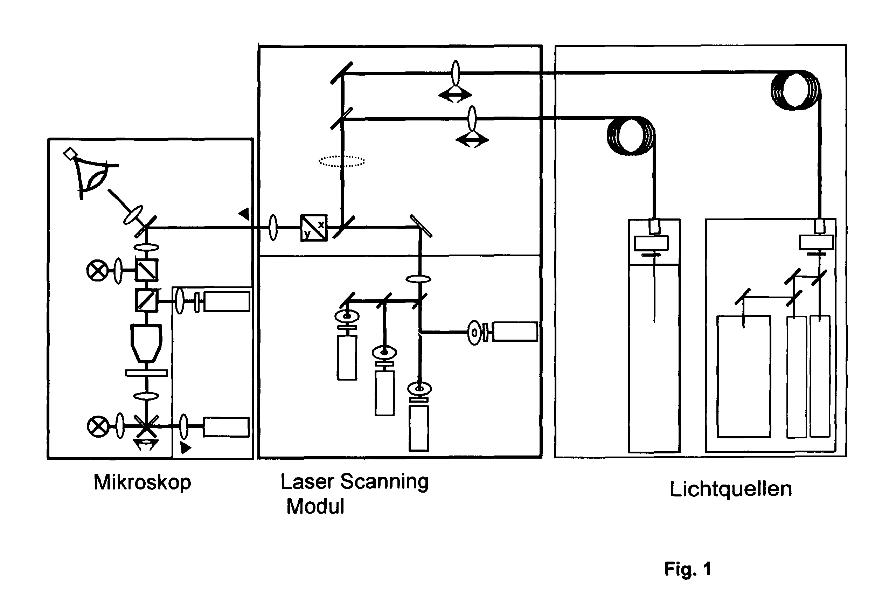

Ein LSM gliedert sich im wesentlichen wie in Fig. 1 dargestellt in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto optischen Kristalls. Anschließend gelangt die Laserstrahlung über eine Faser oder eine geeignete Spiegelanordnung in das Scanmodul.

Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen Sekunden.

Bei einer konfokalen Detektion (descanned Detection) des Fluoreszenzlichtes, gelangt das Licht das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet.

Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen an dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffe gleichzeitig markiert (Multifluoreszenz). Die einzelnen Farbstoffe können mit dem Stand der Technik entweder aufgrund verschiedener Absorptionseigenschaften oder Emissionseigenschaften (Spektren) getrennt nachgewiesen werden. Dazu erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in getrennten Punktdetektoren (PMT x).

Das LSM LIVE der Carl Zeiss Microlmaging GmbH realisiert einen sehr schnellen Linienscanner mit einer Bilderzeugung um 120 Bildern pro Sekunde (http://www.zeiss.de/c12567be00459794/Contents-Frame/fd9fa0090eee01 a641256a550036267b).

Bei sehr schnellen Scanvorgängen ist jedoch zu beachten, dass hohe Scangeschwindigkeiten zu einer starken Erwärmung von Scanner und Scan-Drive führen.

Bei einem VM500-Scanner der Fa. *GSI Lumonics* beispielsweise, darf eine Temperatur von 50° C im Scanner nicht überschritten werden.

Diese Scanner weisen zwar eine Scannerheizung zur Erzielung einer konstanten Scannertemperatur auf um das Driftverhalten zu verbessern, eine Kühloption ist herstellerseitig jedoch nicht vorgesehen.

Die Scanner werden in der Praxis meist über geeignete Befestigungen isoliert oder direkt mit dem Material verbunden in einem Gehäuse möglichst schwingungsfrei untergebracht.

Dabei sind die Aufbauten meist so gewählt, das eine geeignete Wärmeabfuhr möglich ist.

Dies wird beispielsweise durch entsprechend große Metallflächen, die mit der Befestigung der Scanner verbunden sind, erreicht. Damit entsteht ein entsprechendes Temperaturgefälle und die Abfuhr der Wärme wird gewährleistet. Der Nachteil dabei ist, dass die Aufbauten stark an Gewicht und Volumen zunehmen. Diese Eigenschaften der Scaneinrichtungen sind für die meisten Anwendungen nachteilig, weil die Scaneinrichtungen in optische Systeme integriert sind, die in ihren Massen und Volumen eher kleiner werden sollen als größer.

Weiterhin bewirkt die Erhöhung der Scangeschwindigkeit eine Erhöhung der aufgenommenen Leistung, was wiederum eine verbesserte Kühlung erfordert. Zur Zeit wird die Verlustwärme mittels Wärme-Rohr (Heat-Pipe) oder Peltierelementen, im Extremfall auch mittels Wasserkühlung abgeleitet. Die Aufwände sind erheblich und vergrößern in hohen Maße die Aufbauten.

Aufgabe der Erfindung ist es diese Nachteile zu vermeiden.

Die Aufgabe wird durch die unabhängigen Ansprüche gelöst.

Bevorzugte Weiterbildungen sind Gegenstand der abhängigen Ansprüche.

Im Normalbetrieb wird der Scanner im Mittel nicht überlastet. Die aufgenommene Leistung kann durch eine normale und nicht dem Maximalfall angepasste Konstruktion abgeleitet werden. Hochgeschwindigkeitsanwendungen werden meist kurzzeitig und seltener benötigt, weil zwar definierte Vorgänge, die schnell ablaufen, erfasst werden sollen, diese Messungen aber eine entsprechend lange Vorbereitungsphase haben. In dieser Zeit wird ein Scanner nicht benutzt oder nur unwesentlich belastet und er kann sich auf seine Nenntemperatur abkühlen. Ein Scanner wird in seiner Spezifikation immer so angegeben, dass er eine hohe Dynamik verkraften kann. Dabei wird darauf hingewiesen, dass die Maximaltemperatur des Scanners nicht überschritten werden darf. Wenn jedoch eine Temperaturüberwachung des Scanners und der Scan-Drives erfolgt, ist die Durchführung eines kurzzeitigen Hochgeschwindigkeitscans möglich, ohne dass die Temperaturgrenzen überschritten werden. Erreicht wird dieser Zustand durch die erfindungsgemäße Kombination der Messung der Temperaturen der Scanner und der Scannertreiber (Scandrives), sowie der Steuerung eines Lüfters nach Anforderung dieses Messsystems. Bei einem Hochgeschwindigkeitsscan ist der zur Kühlung des Scan-Drives benutzte Lüfter vorteilhaft ausgeschaltet, damit mögliche Erschütterungen während der Messung durch den Lüfter und Verwirbelungen, die sich nachteilig auf den optischen Strahlengang auswirken, vermieden werden. Vorteilhaft kann bei diesem Verfahren auf aufwändige Kühlverfahren wie z. B. Wasserkühlung, Peltier-Kühlung u. ä. verzichtet und ein einfacher Lüfter eingesetzt werden.

Im Scan-System wird vorteilhaft eine kombinierte Temperatur-Lüftersteuerung eingesetzt, die in der Lage ist, sowohl die Temperatur der Scanner durch fortlaufende Messung mittels der scannerinternen Temperatursensoren zu überwachen, als auch die Temperatur der Scan-Drives durch Einsatz eines externen mit dem Kühlkörper der Drives thermisch verbundenen Lüfter-Steuerungs-Schaltkreises zu kontrollieren. Dieser Lüfter-Steuerungs-Schaltkreis (Fan-Controller) besitzt eine eigene Temperaturerfassung und schaltet in Abhängigkeit von festgelegten Temperaturschwellen einen Lüfter ein bzw. aus, wobei diese Schaltvorgänge auch durch ein äußeres Schaltsignal freigegeben oder blockiert werden können. Dabei laufen mehrere Mess- und Steuervorgänge gleichzeitig ab. Die Steuerung und Messwertaufnahme wird dabei von unterschiedlichen unabhängigen Vorgängen geleitet. Einmal wird eine Abhängigkeit der Temperatur von der Scangeschwindigkeit im angeschlossenen Rechnersystem verwaltet und weiterhin wird der Lüfter über die eigenständige, aber trotzdem auch extern steuerbare Ansteuerung betrieben. Somit ist erfindungsgemäß ein Schutz des Systems erreichbar. Die Kombination der Messstellen und die Auswertung dieser in Verbindung mit dem Scan-Ansteuerregime, das der Anwender benutzt, führt zu einer ökonomischen Lösung für ein Scansystem mit hoher Dynamik. Eine preiswerte Lösung wird durch den Einsatz eines Lüfters mit dem erwähnten Temperatur-Messsystem erreicht, der nur dann eingeschaltet wird, wenn die Temperatur am Kühlkörper der Scan-Drives einen oberen Grenzwert überschreitet. Diese Art und Weise der Temperaturerfassung lässt ein variables Scan-Regime zu, bei dem der Scanner als auch die Drives kurzzeitig bis an die Grenzen betrieben werden können, ohne dass das Risiko einer thermischen Zerstörung besteht. Die interne Grenztemperatur der Scanner wird während des Scans echtzeitmäßig durch Abfrage des internen Temperatur-Sensors über einen Analog-Digital-Wandler (ADC) gemessen. Wird währen des Scans der Grenzwert überschritten wird eine Meldung ausgegeben und der High-Speed Scan wird definiert abgebrochen. Bei Unterschreitung einer Mindesttemperatur kann kurzzeitig ein erneuter High-Speed Scan erlaubt werden. Die Temperatur der Drives wird über den Sensor der Lüftersteuerung erfasst und intern mit einer Schwelle verglichen. Bei Erreichen der Grenztemperatur wird der Lüfter automatisch eingeschaltet und der User erhält eine Meldung, dass der Lüfter eingeschaltet ist. Für einen Übersichtsscan, bei dem nur Einstellvorgänge vorgenommen werden, kann der Lüfter ständig betrieben werden , sogar mit unterschiedlichen Geschwindigkeiten, die für noch ausreichende Kühlung sorgen aber nur geringe Windgeräusche verursachen. Das Zusammenspiel der internen Temperaturmessung und der Grenztemperaturkurve der Scanner, abgelegt im Rechner, und der externen Temperaturmessung in Verbindung mit dem Lüfter bringt Vorteile bei der Konstruktion und des Aufbaus einer Scanningeinheit im System.

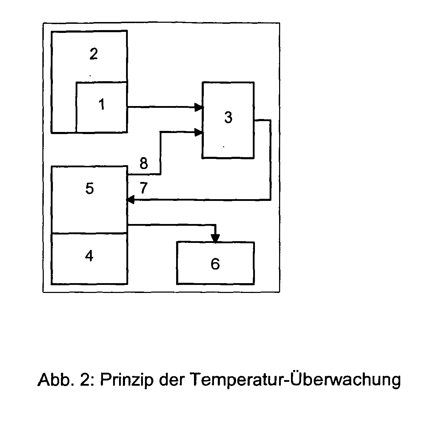

### Ausführungsbeispiel (Abb. 2)

Die Erfindung wird im Folgenden anhand der schematischen Zeichnung in Fig.2 näher erläutert.

Ein Temperatursensor (1) im Scanner (2) erfasst dessen Temperatur mit Hilfe eines Mikrocontrollers (3) in ausreichend kurzen Abständen. Die Temperaturerfassung des Scan-Drive-Kühlkörpers (4) erfolgt durch einen thermisch mit diesem gekoppelten Fan-Controller (5), der in Abhängigkeit von der Kühlkörpertemperatur einen Lüfter (6) ein- und ausschaltet oder mittels Puls-Weiten-Modulation (PWM)dessen Drehzahl regelt. Über einen Schalteingang (7) am Fan-Controller (5) kann der Mikrocontroller (3) für den Lüfter (6) ein Disable erzeugen. Der Fan-Controller (5) besitzt einen Übertemperaturausgang (8), der beim Überschreiten einer bestimmten Temperatur oberhalb der Lüfter-Einschalttemperatur aktiviert wird. Mit diesem Übertemperaturausgang (8) ist ein Eingang des Mikrocontrollers (3) verbunden. Ist infolge eines High-Speed-Scans die Temperatur des Scan-Drive-Kühlkörpers (4) soweit angestiegen, dass der Übertemperaturausgang (8) aktiv ist, wird über den Mikrocontroller (3) das Disable am Schalteingang (7) aufgehoben - der Lüfter (6) läuft mit maximaler Leistung und senkt die Kühlkörpertemperatur wieder ab.

Erreicht die Temperatur des Scanners (2) 50° C, so wird der Scan abgebrochen und kann erst wieder gestartet werden, wenn eine bestimmte Temperatur unterschritten wird (Software-Hysterese).

Ein High-Speed-Scan ist zeitlich so zu begrenzen, dass die o.g. Fälle nicht auftreten, da nur dann der störungsfreie Scan-Betrieb gewährleistet ist.

Mittels eines angeschlossenen PC's kann der Temperaturverlauf des Scanners sowie der Lüfterstatus für den Operator grafisch dargestellt werden.

## Patentansprüche

1. Verfahren zum Betrieb eines Laser-Scanning-Mikroskopes,
wobei die Probe über mindestens einen Scanner beleuchtet wird und eine Bildaufnahme erfolgt
wobei am Scanner und / oder am Scannertreiber eine Temperaturmessung erfolgt und erst bei Erreichen einer Grenztemperatur eine Kühlvorrichtung gestartet wird.

2. Verfahren nach Anspruch 1,
wobei bei Einschalten der Kühlvorrichtung die Bildaufnahme unterbrochen wird

3. Verfahren zum Betrieb eines Laser-Scanning-Mikroskopes,
wobei die Probe über mindestens einen Scanner beleuchtet wird und eine Bildaufnahme erfolgt
wobei am Scanner und/ oder am Scannertreiber eine Temperaturmessung erfolgt und bei Erreichen einer Grenztemperatur die Bildaufnahme unterbrochen wird und der Scanner heruntergefahren wird.

4. Verfahren zum Betrieb eines Laser-Scanning-Mikroskopes,
wobei die Probe über mindestens einen Scanner beleuchtet wird und eine Bildaufnahme erfolgt
wobei am Scanner und/oder am Scannertreiber eine Temperaturmessung erfolgt und bei Erreichen einer Grenztemperatur eine Anzeigevorrichtung eine optische oder akustische Anzeige vornimmt.

5. Verfahren nach Anspruch 4, wobei die Anzeigevorrichtung das Erreichen der Grenztemperatur und/oder die notwendige Zeit für eine Abkühlung des Scanners und/ oder des Scannertreibers anzeigt.

6. Verfahren nach einem der Ansprüche 1-5, wobei eine Temperaturmessung direkt im Scanner und ein laufender Vergleich mit abgelegten Grenzwertkurven für diesen Scanner im Rechner während des Scans erfolgt.

7. Verfahren nach einem der Ansprüche 1-6,
wobei eine Bildaufnahme erfolgt bis eine Grenztemperatur erreicht ist.
